# EUROPEAN PATENT SPECIFICATION

(11) **EP 3 949 751 B1**
(45) Date of publication and mention of the grant of the patent: **27.09.2023**
(21) Application number: 20782289.1
(22) Date of filing: 28.01.2020
(51) Int. Cl.: A23L 2/00, A23L 2/52, A23L 33/105

(54) **CONTAINERIZED BEVERAGE CONTAINING 1-DEOXYNOJIRIMYCIN**
GETRÄNK IN BEHÄLTER ENTHALTEND 1-DEOXYNOJIRIMYCIN
BOISSON CONTENEURISÉE CONTENANT DE LA 1-DÉSOXYNOJIRIMYCINE

(30) Priority: 04.04.2019 JP 2019072297
(43) Date of publication of application: 09.02.2022
(73) Proprietor: Suntory Holdings Limited, Osaka 530-8203 (JP)
(72) Inventor: NAKATA, Aki, Kawasaki-shi, Kanagawa 211-0067 (JP); MATSUBAYASHI, Hideki, Kawasaki-shi, Kanagawa 211-0067 (JP)
(74) Representative: Vossius & Partner Patentanwälte Rechtsanwälte mbB
(86) International application number: PCT/JP2020/002903
(87) International publication number: WO 2020/202749

(56) References cited:
- JP-A- H09 140 351
- JP-A- 2001 136 953
- JP-A- 2004 105 157
- JP-A- 2004 173 504
- JP-A- 2009 178 099
- JP-A- 2011 087 526
- JP-A- 2013 504 607
- JP-A- 2016 182 078
- JP-A- 2017 108 743
- JP-A- 2018 117 610

## Description

### TECHNICAL FIELD

The present invention relates to a packaged beverage comprising 1-deoxynojirimycin, and more particularly to a beverage comprising 1-deoxynojirimycin and further comprising a specified amount of ethanol and/or propylene glycol.

### BACKGROUND ART

1-Deoxynojirimycin is an iminosugar found in mulberry leaves or other plants, and is reported to be capable of suppressing the elevation of blood glucose levels. In recent years, the physiological activity of mulberry leaves has been focused, and various reports have been published regarding beverages incorporating a mulberry leaf extract. For example, there have been reports on a food composition for reducing blood glucose levels, comprising a lactobacillus-fermented product of *Momordica charantia* var. *pavel,* a magnesium salt, and a mulberry leaf extract (PTL 1), and on a food or beverage composition for inhibiting saccharide-degrading enzymes, comprising a mulberry leaf extract and a green tea catechin (PTL 2). Also, it is known that sugar-mimic alkanoids such as 1-deoxynojirimycin have a disadvantage in that when they are added to foods and beverages, they may deteriorate the flavor of the foods and beverages (PTL 3).

Meanwhile, with regard to beverages having an aroma improved by addition of ethanol and propylene glycol, PTL 4 discloses the improvement of the resin-like aroma of methoxyflavone caused by exposure to ultraviolet light, and PTL 5 discloses the improvement of the bitterness and astringency coming from tiliroside.
JP H09-140351A relates to a food or beverages composition for improving blood glucose comprising 1-deoxynoirimycin.
JP 2018-117610A discloses beverages containing tiliroside and ethanol or propylene glycol.

### CITATION LIST

### PATENT LITERATURES

PTL 1: Japanese Unexamined Patent Application Publication No. JP 2008-259498
PTL 2: Japanese Unexamined Patent Application Publication No. JP 2004-105157
PTL 3: Japanese Unexamined Patent Application Publication No. JP H09-140351
PTL 4: Japanese Unexamined Patent Application Publication No. JP 2017-112924
PTL 5: Japanese Unexamined Patent Application Publication No. JP 2015-122968

### SUMMARY OF INVENTION

### TECHNICAL PROBLEM

The present inventors have made studies on the utilization of 1-deoxynojirimycin in beverages, and found that in beverages containing high concentrations of 1-deoxynojirimycin, the unpleasant rough feeling coming from 1-deoxynojirimycin is more likely to ringer on the tongue, leading to deterioration of palatability. This rough feeling on the tongue coming from 1-deoxynojirimycin is also referred to herein as "harsh aftertaste", and has a different meaning from "bitterness" or "astringency".

Therefore, an object of the present invention is to provide a packaged beverage characterized in that the harsh aftertaste coming from 1-deoxynojirimycin is reduced.

### SOLUTION TO PROBLEM

The present inventors have made intensive studies to achieve the aforementioned object and, as a result, found that ethanol and propylene glycol have a superior effect in improving the harsh aftertaste coming from 1-deoxynojirimycin. The inventors found that by adjusting the ethanol and propylene glycol content in a beverage to be within a specified range, the harsh aftertaste coming from 1-deoxynojirimycin is reduced, enabling production of a packaged beverage with a pleasant aftertaste. Thus, the inventors have completed the present invention.

This invention is directed, but not limited, to the following.
(1) A packaged beverage comprising 0.1 to 0.75 mg/100 mL of 1-deoxynojirimycin and 0.005 to 1.0 v/v% of ethanol and/or propylene glycol.
(2) The packaged beverage as set forth in (1), wherein the packaged beverage has a pH of from 2.3 to 5.5.
(3) The packaged beverage as set forth in (1) or (2), wherein the packaged beverage is a heat sterilized beverage.
(4) The packaged beverage as set forth in any of (1) to (3), wherein the packaged beverage comprises 0.1 to 0.5 mg/100 mL of 1-deoxynojirimycin and 0.05 to 1.0 v/v% of ethanol and/or propylene glycol.

### ADVANTAGEOUS EFFECTS OF INVENTION

According to the present invention, there can be provided a packaged beverage that comprises 1-deoxynojirimycin but has a pleasant aftertaste.

### DESCRIPTION OF EMBODIMENTS

One embodiment of the present invention is directed to a packaged beverage comprising 0.1 to 0.75 mg/100 mL of 1-deoxynojirimycin and 0.005 to 1.0 v/v% of ethanol and/or propylene glycol.

### (1-Deoxynojirimycin)

1-Deoxynojirimycin, which is an iminosugar found in mulberry leaves or the like, is also called moranoline or 1,5-dideoxy-1,5-imino-D-glucitol, and is assigned CAS Registry No. 19130-96-2.

The beverage of the present invention comprises 0.1 to 0.75 mg/100 mL of 1-deoxynojirimycin. When a beverage has a 1-deoxynojirimycin content of not less than 0.1 mg/100 mL, the harsh aftertaste coming from 1-deoxynojirimycin is felt, but according to this invention, this harsh aftertaste can be suppressed. The beverage of this invention has a 1-deoxynojirimycin content of preferably not less than 0.15 mg/100 mL, more preferably not less than 0.2 mg/100 mL.

In contrast, when a beverage has a 1-deoxynojirimycin content of more than 0.75 mg/100 mL, the harsh aftertaste of 1-deoxynojirimycin may become too intense so that the action and effect of this invention may not be adequately exhibited. From this viewpoint, it is preferred that the upper limit of the 1-deoxynojirimycin content in the beverage of this invention should be not more than 0.7 mg/100 mL, more preferably not more than 0.6 mg/100 mL, still more preferably not more than 0.5 mg/100 mL. The 1-deoxynojirimycin content in the beverage can be measured by using, for example, high-performance liquid chromatography (HPLC).

The 1-deoxynojirimycin used in the present invention is not limited to those extracted or isolated from a mulberry plant or other plants. Substances produced by chemical synthesis or fermentation, or products produced by bacteria may also be used. In this invention, 1-deoxynojirimycin can be used in the form of a pure product or a plant extract. Examples of commercially available products of 1-deoxynojirimycin include the product sold by FUJIFII,M Wako Pure Chemical Corporation.

In the present invention, the plant extract containing 1-deoxynojirimycin can be used in the form of a plant extract from a mulberry plant or other plants. Examples of mulberry plants that can be used include *Morus bombycis* Koidzumi, *Morus alba* L., *Morus australis* Poir, *Morus latifolia* Poir., *Morus mongolica* Schneid, *Morus nigra* L., *Morus rubra* L., and *Morus boninensis* Koidzumi, and any hybrids or variants thereof can also be used. The site of the plant to be used is not limited in any way -- leaves, branches, sprouts, barks, trunks, roots, root barks, flowers, syncarps and the like can be used. Examples of mulberry plant extracts include, but are not limited to, the mulberry leaf extract powder, sterilized mulberry leaf powder and the like produced by Toyotama Healthy Food Co., Ltd.

In the case of using a plant extract, it is preferable to use a plant extract with increased concentration of 1-deoxynojirimycin, because the object to be achieved by the present invention becomes prominent. The following presents an exemplary method for obtaining a mulberry leaf extract containing 1-deoxynojirimycin. First, an alcohol such as hydrous ethanol is added to a dry product of mulberry leaves to obtain an extract. Since 1-deoxynojirimycin is present only at low concentrations (about 0.1-0.2% by weight) in dry mulberry leaves, extraction with an alcohol is preferred to achieve efficient extraction. The obtained liquid extract is treated in a centrifuge to remove insolubles, and is then vacuum concentrated to obtain a mulberry leaf extract. The thus-obtained mulberry leaf extract generally contains 1-deoxynojirimycin at a concentration of from 0.4 to 1% by weight.

### (Ethanol and/or propylene glycol)

The beverage of the present invention comprises 0.005 to 1.0 v/v% of ethanol and/or propylene glycol. When the ethanol and/or propylene glycol content in the beverage falls within the aforementioned range, the harsh aftertaste coming from 1-deoxynojirimycin can be effectively improved.

The ethanol content in the beverage of the present invention is preferably not less than 0.01 v/v%, more preferably not less than 0.05 v/v%. Also, the ethanol content in the beverage of this invention is preferably not more than 0.7 v/v%, more preferably not more than 0.5 v/v%. The propylene glycol content in the beverage of this invention is preferably not less than 0.01 v/v%, more preferably not less than 0.05 v/v%. Also, the propylene glycol content in the beverage of this invention is preferably not more than 0.7 v/v%, more preferably not more than 0.5 v/v%.

The beverage of the present invention may comprise both ethanol and propylene glycol. When the beverage of this invention comprises both ethanol and propylene glycol, it is required that the total content of the two components should fall within the range of from 0.005 to 1.0 v/v%. In a preferred embodiment, the total content of ethanol and propylene glycol in the beverage of this invention is in the range of from 0.01 to 0.7 v/v%, more preferably from 0.05 to 0.5 v/v%.

The ethanol or propylene glycol content in the beverage of the present invention can be measured by following a method known to skilled artisans -- for example, using a spectroscopic method such as HPLC, LC-MS, GC-MS, LC, GC, or near-infrared spectroscopy.

The ratio of ethanol content to 1-deoxynojirimycin content (ethanol/1-deoxynojirimycin) in the beverage of the present invention is not particularly limited, and is for example in the range of from 0.005 to 10, preferably from 0.01 to 7, more preferably from 0.05 to 5. It should be noted that the aforementioned ratio is a value calculated using a 1-deoxynojirimycin expressed in the unit of mg/100 mL and an ethanol content expressed in the unit of v/v%.

The ratio of propylene glycol content to 1-deoxynojirimycin content (propylene glycol/1-deoxynojirimycin) in the beverage of the present invention is not particularly limited, and is for example in the range of from 0.005 to 10, preferably from 0.01 to 7, more preferably from 0.05 to 5. It should be noted that the aforementioned ratio is a value calculated using a 1-deoxynojirimycin content expressed in unit of mg/100 mL and a propylene glycol content expressed in unit of v/v%.

### (Acidic beverage)

The beverage of the present invention is preferably an acidic beverage. By adding not only a specified amount of ethanol or propylene glycol but also an acidic component to the beverage, the harsh aftertaste of 1-deoxynojirimycin present in the beverage can be suppressed or reduced more effectively. It is required that the beverage of this invention should have an acidic pH, preferably a pH of from 2.3 to 5.5, more preferably from 2.5 to 5.0, still more preferably from 3 to 4.7.

The pH of the beverage of the present invention can be adjusted, as appropriate, with the use of an acidulant or a pH adjustor. The type of an acidulant or pH adjustor that can be used in the beverage of this invention is not particularly limited, and examples thereof include: organic acids such as ascorbic acid, citric acid, gluconic acid, succinic acid, tartaric acid, lactic acid, fumaric acid, malic acid, and adipic acid; inorganic acids such as phosphoric acid; and salts thereof; or one or two or more selected from fruit juices from citrus fruits such as lemon, grapefruit, orange, and *Citrus unshiu.*

The type of the beverage of the present invention is not particularly limited. The inventive beverage can be of any type, including soft drinks, nutritional beverages, functional beverages, and flavored water (near water) beverages. Further, the beverage of this invention can be a beverage containing no carbon dioxide gas or a beverage containing carbon dioxide gas. Examples of beverages containing no carbon dioxide gas include, but are not limited to, fruit juice beverages, milk beverages, and sport drinks. Examples of beverages containing carbon dioxide gas include, but are not limited to, coke, diet coke, ginger ale, soda pop, and fruit juice-flavored carbonated water.

Flavored water beverages are generally characterized by being relatively low in the amounts and types of other ingredients added besides water. Therefore, when an additional ingredient is added to such beverages, the beverages may easily lose the balance of flavor, so that it is difficult to suppress the harsh aftertaste of 1-deoxynojirimycin while maintaining the palatability of those beverages, such as clean taste and refreshing flavor. The beverage of the present invention is characterized in that since the beverage contains ethanol or propylene glycol at a concentration within the specified range, the beverage is less apt to make one feel the harsh aftertaste of 1-deoxynojirimycin while maintaining its palatability such as clean taste and refreshing flavor. From this viewpoint, a beverage with a low Brix (Bx) value is one preferred embodiment of this invention.

### (Other components)

To the extent that there is no deviation from the intended object of the present invention, the packaged beverage of this invention may have other additives optionally added thereto alone or in combination, including antioxidant, pH adjustor, flavoring, pigment, emulsifier, preservative, seasoning, sweetener, acidulant, vitamin, essence, and quality stabilizer.

### (Packaged beverage)

The package used to make the packaged beverage of the present invention is not particularly limited, and can be any of commonly used packages. Preferred examples of resin packages include polyethylene terephthalate-based molded packages (so-called PET bottle). Other packages besides resin packages include metal can, paper packages combined with metallic foils or plastic films, and glass bottle. The beverage of this invention can be provided in a form packed and sealed in such a package. The volume of the beverage of this invention is not particularly limited, and is for example in the range of from 350 mL to 1000 mL, preferably from 500 mL to 1000 mL.

As described above, the present invention effectively suppresses the harsh aftertaste coming from 1-deoxynojirimycin. The harsh aftertaste becomes prominent particularly after heat sterilization. Therefore, in a preferred embodiment, the beverage of this invention is a heat sterilized, packaged beverage, since the effect of this invention can be particularly advantageously obtained. The heat sterilization conditions adopted in this invention can be, for example, those conditions having similar effects to those of the conditions stipulated in the Food Sanitation Act of Japan, and can be specifically set to the following conditions: at 60 to 150°C, preferably at 90 to 150°C, more preferably at 110 to 150°C, for 1 second to 60 minutes, preferably for 1 second to 30 minutes. When the beverage of this invention is produced using a heat-resistant package (e.g., metal can, glass bottle), the beverage can be subjected to retort sterilization (at 110 to 140°C for 1 minute to several tens of minutes).

When the beverage is produced using a non-heat-resistant package (e.g., PET bottle, paper package), a prepared liquid, for example, can be first sterilized at high temperatures for a short period of time using a plate-type heat exchanger or the like (UHT sterilization at 110 to 150°C for 1 second to several tens of seconds), and then cooled to a specified temperature and packed in the package. As long as the packaged beverage of this invention is produced through heat sterilization under more intense conditions than those stipulated in the Food Sanitation Act of Japan, the intensity of the harsh aftertaste coming from 1-deoxynojirimycin does not change.

### EXAMPLES

Hereunder, the present invention will be specifically described in detail by reference to experimental examples, but this invention is not limited to these examples. Unless otherwise stated herein, all numerical ranges are inclusive of their endpoints.

### <Analysis of 1-deoxynojirimycin>

The 1-deoxynojirimycin content in beverage samples was analyzed using HPLC (high-performance liquid chromatography). Beverage samples were vacuum concentrated, if necessary, before analysis.
HPLC analysis conditions:
- Column: TSKgel Amide-80, ϕ4.6 mm × 250 mm, particle size 5 µm
- Mobile phase: Mixed solution of water, acetonitrile and acetic acid
- Flow rate: 1.0 mL/min.
- Column temperature: 40°C
- Ionization method: Electrospray ionization (positive ion detection mode)
- Mass-to-change ratio (m/z): 164.0 → 109.9

### Experiment 1: Harsh aftertaste suppression effect of ethanol (1)

Different beverages were prepared by adding 1-deoxynojirimycin (produced by FUJIFILM Wako Pure Chemical Corporation; purity: 98%) and ethanol (produced by FUJIFILM Wako Pure Chemical Corporation) and by adjusting pH with citric acid (produced by Nacalai Tesque, Inc.) and trisodium citrate (produced by Nacalai Tesque, Inc.) so as to ensure that the beverages after heat sterilization contained the different components at such concentrations as shown in the table given below. The prepared beverages were packed in can packages and heat sterilized at 130°C for 1 minute, thereby to prepare different packaged beverages (sample Nos. 1-1 to 1-23). The prepared packaged beverages had a pH of 3.2 and a Brix of about 0.2.

The prepared packaged beverages were evaluated by three professional panelists in the five-point scale from 1 to 5 points. Each of the beverage samples was evaluated according to the criteria detailed below, by reference to the harsh aftertaste rated as 1 point, which was felt in a comparative example containing 1-deoxynojirimycin in the same amount as each working example but not containing ethanol. The ratings given by each panelist were discussed again in a free-form manner among all the panelists, and the final ratings were assigned as integer values in consensus among them.
- 5 points: The harsh aftertaste is significantly improved.
- 4 points: The harsh aftertaste is improved.
- 3 points: The harsh aftertaste is improved to some degree.
- 2 points: The harsh aftertaste is almost not improved.
- 1 point: The harsh aftertaste is not improved at all.

The results of the sensory evaluation are shown in Table 1. The harsh aftertaste coming from 1-deoxynojirimycin was suppressed successfully merely by adopting the simple approach of adding a small amount of ethanol to beverages containing high concentrations of 1-deoxynojirimycin. In sample No. 1-23, which had a 1-deoxynojirimycin content of 2.0 mg/100 mL, the characteristic harsh aftertaste of 1-deoxynojirimycin became too intense. In sample No. 1-17, which had an ethanol concentration of 2.0 mg/100 mL, reduction/suppression of harsh aftertaste was observed, but the astringent taste of ethanol was prominently felt leading to deterioration of the palatability of the beverage.

**[Table 1]**

| Beverage sample | 1-1 (Com. Ex.) | 1-2 | 1-3 (Com. Ex.) | 1-4 | 1-5 | 1-6 | 1-7 | 1-8 | 1-9 |
|---|---|---|---|---|---|---|---|---|---|
| 1-Deoxynojirimycin content (mg/100ml) | 0.1 | | 0.2 | | | | | | |
| Ethanol (v/v%) | 0 | 0.005 | 0 | 0.005 | 0.01 | 0.1 | 0.2 | 0.5 | 1.0 |
| Harsh aftertaste (sensory rating) | 1 | 4 | 1 | 4 | 4 | 5 | 5 | 5 | 5 |
| | | | | | | | | | |

| Beverage sample | 1-10 (Com. Ex.) | 1-11 | 1-12 | 1-13 | 1-14 | 1-15 | 1-16 | 1-17 | |
|---|---|---|---|---|---|---|---|---|---|
| 1-Deoxynojirimycin content (mg/100ml) | 0.4 | | | | | | | | |
| Ethanol (v/v%) | 0 | 0.005 | 0.05 | 0.1 | 0.2 | 0.5 | 1.0 | 2.0 | |
| Harsh aftertaste (sensory rating) | 1 | 4 | 5 | 5 | 5 | 5 | 5 | 5 | |
| | | | | | | | | | |

| Beverage sample | 1-18 (Com. Ex.) | 1-19 | 1-20 | 1-21 | 1-22 (Com. Ex.) | 1-23 (Com. Ex.) | | | |
|---|---|---|---|---|---|---|---|---|---|
| 1-Deoxynojirimycin content (mg/100ml) | 0.75 | | | | 2.0 | | | | |
| Ethanol (v/v%) | 0 | 0.005 | 0.05 | 1 | 0 | 0.05 | | | |
| Harsh aftertaste (sensory rating) | 1 | 4 | 5 | 5 | 1 | 2 | | | |

### Experiment 2: Harsh aftertaste suppression effect of propylene glycol

Different packaged beverages were prepared by the same procedure as in Experiment 1 so as to ensure that the beverages after heat sterilization contained different components at such concentrations as shown in the table given below. The prepared packaged beverages had a pH of 3.2 and a Brix of about 0.2.

The prepared packaged beverages were subjected to sensory evaluation by the same procedure as in Experiment 1. The results of the sensory evaluation are shown in Table 2. Suppression of harsh aftertaste was achieved by adding propylene glycol to packaged beverages containing 1-deoxynojirimycin at concentrations of 0.2 mg, 0.4 mg and 0.75 mg per 100 mL. In other words, the harsh aftertaste coming from 1-deoxynojirimycin was suppressed successfully merely by adopting the simple approach of adding propylene glycol to beverages containing high concentrations of 1-deoxynojirimycin.

**[Table 2]**

| Beverage sample | 2-1 (Com. Ex.) | 2-2 | 2-3 | 2-4 | 2-5 | 2-6 | 2-7 | 2-8 | 2-9 | 2-10 |
|---|---|---|---|---|---|---|---|---|---|---|
| 1-Daoxynojirimycin content (mg/100ml) | 0.2 | | | | 0.4 | | | | 0.75 | |
| Propylene glycol (v/v%) | 0 | 0.005 | 0.1 | 1.0 | 0 | 0.005 | 0.1 | 1.0 | 0 | 0.005 |
| Harsh aftertaste (sensory rating) | 1 | 4 | 5 | 5 | 1 | 4 | 5 | 5 | 1 | 4 |

### Experiment 3: Harsh aftertaste suppression effect of ethanol (2)

Different packaged beverages were prepared by the same procedure as in Experiment 1 so as to ensure that the beverages after heat sterilization contained different components at such concentrations as shown in the table given below. The prepared packaged beverages had a pH of 3.2 and a Brix of about 4.7.

The prepared packaged beverages were subjected to sensory evaluation by the same procedure as in Experiment 1, by reference to the harsh aftertaste rated as 1 point, which was felt in those beverage samples containing no ethanol (sample Nos. 3-1, 3-4).

As evident from the results shown in Table 3, according to the present invention, the harsh aftertaste coming from 1-deoxynojirimycin was suppressed successfully even in the sugar and acid-containing packaged beverages.

**[Table 3]**

| Beverage sample | 3-1 (Com. Ex.) | 3 -2 | 3 -3 | 3 -4 (Com. Ex.) | 3 -5 | 3 -6 |
|---|---|---|---|---|---|---|
| Fructose glucose syrup (g/100ml) | 6 | | | | | |
| Citric acid (g/100ml) | 0.15 | | | | | |
| Trisodium citrate (g/100ml) | 0.01 | | | | | |
| 1-Deoxynojirimycin (mg/100ml) | 0.2 | | | 0.4 | | |
| Ethanol (v/v%) | 0 | 0.05 | 0.2 | 0 | 0.05 | 0.2 |
| Harsh aftertaste (sensory rating) | 1 | 4 | 5 | 1 | 4 | 5 |

### Experiment 4: Harsh aftertaste suppression effect of ethanol and propylene glycol

Different packaged beverages were prepared by the same procedure as in Experiments 1 and 2 so as to ensure that the beverages after heat sterilization contained different components at such concentrations as shown in the table given below. The prepared packaged beverages had a pH of 3.2 and a Brix of about 0.2.

The prepared packaged beverages were subjected to sensory evaluation by the same procedure as in Experiments 1 and 2. As a result, it was found that the harsh aftertaste coming from 1-deoxynojirimycin was improved even by combined use of ethanol and propylene glycol.

**[Table 4]**

| Beverage sample | 4-1 (Com. Ex.) | 4-2 | 4-3 | 4-4 |
|---|---|---|---|---|
| 1-Deoxynojirimycin content (mg/100ml) | 0.4 | | | |
| Ethanol (v/v%) | 0 | 0.1 | 0 | 0.1 |
| Propylene glycol (v/v%) | 0 | 0 | 0.1 | 0.1 |
| Harsh aftertaste (sensory rating) | 1 | 5 | 5 | 5 |

## Claims

1. A packaged beverage comprising 0.1 to 0.75 mg/100 mL of 1-deoxynojirimycin and 0.005 to 1.0 v/v% of ethanol and/or propylene glycol.

2. The packaged beverage according to claim 1, wherein the packaged beverage has a pH of from 2.3 to 5.5.

3. The packaged beverage according to claim 1 or 2, wherein the packaged beverage is a heat sterilized beverage.

4. The packaged beverage according to any of claims 1 to 3, wherein the packaged beverage comprises 0.1 to 0.5 mg/100 mL of 1-deoxynojirimycin and 0.05 to 1.0 v/v% of ethanol and/or propylene glycol.

## Patentansprüche

1. Ein verpacktes Getränk, umfassend 0,1 bis 0,75 mg/100 ml 1-Deoxynojirimycin und 0,005 bis 1,0% Vol./Vol. Ethanol und/oder Propylenglycol.

2. Das verpackte Getränk nach Anspruch 1, wobei das verpackte Getränk einen pH von 2,3 bis 5,5 aufweist.

3. Das verpackte Getränk nach Anspruch 1 oder 2, wobei das verpackte Getränk ein hitzesterilisiertes Getränk ist.

4. Das verpackte Getränk nach einem der Ansprüche 1 bis 3, wobei das verpackte Getränk 0,1 bis 0,5 mg/100 ml 1-Deoxynojirimycin und 0,05 bis 1,0% Vol./Vol. Ethanol und/oder Propylenglycol umfasst.

## Revendications

1. Boisson conteneurisée comprenant 0,1 à 0,75 mg/100 ml de 1-désoxynojirimycine et 0,005 à 1,0 % v/v d'éthanol et/ou de propylèneglycol.

2. Boisson conteneurisée selon la revendication 1, laquelle boisson conteneurisée a un pH de 2,3 à 5,5.

3. Boisson conteneurisée selon la revendication 1 ou 2, laquelle boisson conteneurisée est une boisson stérilisée à la chaleur.

4. Boisson conteneurisée selon l'une quelconque des revendications 1 à 3, laquelle boisson conteneurisée comprend 0,1 à 0,5 mg/100 ml de 1-désoxynojirimycine et 0,05 à 1,0 % v/v d'éthanol et/ou de propylèneglycol.
